# EUROPEAN PATENT SPECIFICATION

(11) **EP 1 627 811 B1**
(45) Date of publication and mention of the grant of the patent: **12.10.2011**
(21) Application number: 04077358.2
(22) Date of filing: 20.08.2004
(51) Int. Cl.: B64C 23/06

(54) **Nacelle chine installation for drag reduction**
Installation einer Wirbelsteuervorrichtung für Luftwiderstandsreduzierung
Installation d appareil de contrôle de tourbillons de nacelle pour la réduction de la traînée

(43) Date of publication of application: 22.02.2006
(73) Proprietor: The Boeing Company, Seattle, WA 98124-2207 (US)
(72) Inventor: Konings, Christopher A., Kirkland, Washington 98033-8830 (US)
(74) Representative: Land, Addick Adrianus Gosling

(56) References cited:
- US-A- 3 744 745
- US-A- 4 540 143
- US-A- 4 685 643

## Description

### FIELD OF THE INVENTION

This invention relates generally to aerodynamics of aircraft and, more specifically, to aircraft wake controls.

### BACKGROUND OF THE INVENTION

Air travel has continued to grow in popularity. At the same time, air carriers are serving an ever-growing population. However, while the population wants sufficient services, they may not want to accept consequences which attend provision of those services. To take a common example, as cities grow, suburbs and population centers expand toward the direction of what used to be a remotely located airport. At the same time, to serve the growing population, more flights might be added. Ultimately, people who have moved toward the airport experience some of the noise associated with air travel.

Increased airport noise presents problems. For example, in the late 1980s, the airport serving the city of Charlotte, North Carolina, added runway capacity to support additional air traffic needed to support the burgeoning community. However, nearby residents did not want to the additional noise that would result from the air traffic taking off from and landing on that new runway. Some of these residents went to court and obtained injunctive relief to prevent the runway from being used. Travelers who flew into and out of Charlotte experienced tremendous delays as a result.

Practically, there is no way to prevent population growth around an airport. Moreover, as a matter of law, it does not matter whether the airport was situated long before a population center ever emerged near the airport - citizens still have at least the right to seek legal relief if the noise amounts to the level of a "public nuisance."

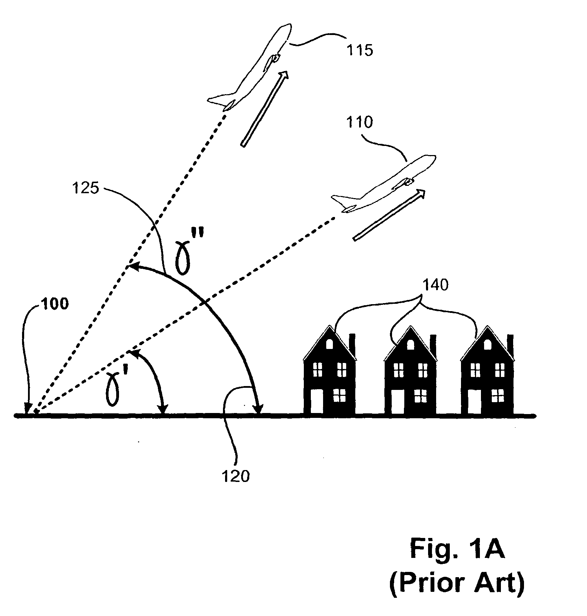

Noise concerns can be reduced if an aircraft is able to climb more steeply upon takeoff. An aircraft able to climb more steeply is able to distance itself more quickly from points on the ground. An aircraft's rate of climb is expressed as a climb gradient γ which represents a ratio of the aircraft's lift to the aircraft's drag. FIGURE 1A illustrates how an improved climb gradient γ improves an aircraft's ability to climb over and away from a populated area. At an airport 100, a first aircraft 110 has a climb gradient γ' 120 and a second aircraft 115 has a greater climb gradient γ" 125. Because the first aircraft 110 has a lesser climb gradient γ' 120 than the climb gradient γ" 125 of the second aircraft 115, the first aircraft 110 cannot climb as steeply as the second aircraft 115. As a result, the first aircraft 110 with the lesser climb gradient γ' 120 passes more closely over neighboring houses and other structures 140. Because noise is attenuated with distance, from the perspective of occupants of the houses and other structures 140, the second aircraft 115 yields less noise. Accordingly, increasing the climb gradient effectively reduces noise around an airport.

Improving the climb gradient of an aircraft not only can effectively reduce noise around airports, but can yield other benefits. To name one example, an aircraft with an improved climb gradient can carry a larger payload. The Federal Aviation Administration (FAA) mandates that an aircraft must meet a certain minimum climb gradient at take off. As a result, on hot days or at high altitude airports it is not unusual for a carrier to have to offload passengers or luggage in order to meet FAA safety guidelines to be able to depart. By decreasing drag, the denominator of the climb gradient, the climb gradient is increased. For instance, for every reduction of 0.0001 in the drag coefficient, the denominator of the climb gradient, a Model 777 commercial jetliner manufactured by The Boeing Company can carry an additional two-hundred pounds of payload. In other words, for every 0.0001 improvement in the drag coefficient, a Model 777 commercial jetliner can safely carry another average passenger. Thus, improved/reduced drag not only reduces noise around airports, but can allow carriers to operate more efficiently, thereby reducing costs.

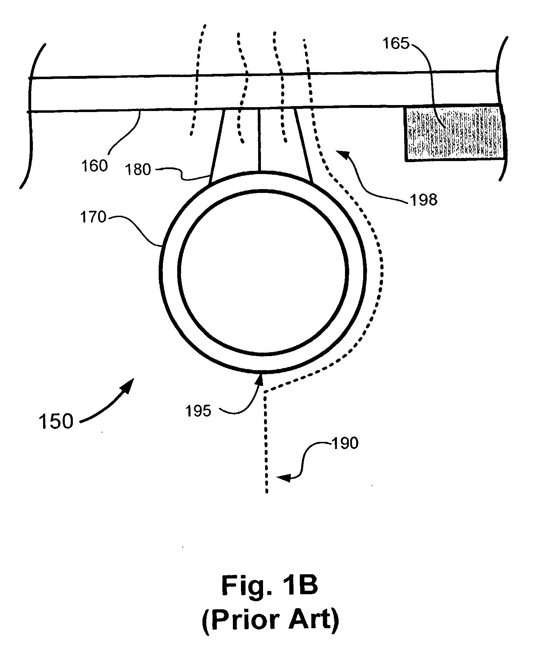

FIGURE 1B shows a conventional wing assembly 150 having a wing 160, an engine nacelle 170, and an engine nacelle mount 180 securing the engine nacelle 170 to the wing 160. The wing 160 is equipped with a leading edge high lift device 165, such as a flat panel Krueger flap, a variable camber Krueger flap, or a slat which is shown in a deployed position in FIGURE 1B. A flow of fluid 190, which in this case is air, strikes a leading edge 195 of the wing assembly 150 in an operational angle of attack situation, such as takeoff, climbing, level flight, and other situations. As the flow of fluid 190 passes around the engine nacelle 170, a turbulent flow 198 results over the wing 160.

Such turbulent flow 198 is understood by one ordinarily skilled in the art as occurring in the wake of fluid flow occurring after the fluid flow has passed over a body. This turbulent flow 198 causes drag over the wing 160. As previously described, drag reduces the climb gradient and, thus, results in added noise around airports.

The prior art document US-A-3744745 discloses a set of lifting vanes attached to the sides of an engine nacelle which protrudes forward from beneath the wing of an aircraft. The vanes are arranged at approximately 45° from horizontal in the fore-to-aft view of the engine, one on the inboard side and the other on the outboard side. They are shaped and located to produce a significant downwash field contribution in the region of the wing leading edge aft of the engine nacelle, so as to delay premature airflow separation or stall on the wing rearward from the engine.

There is an unmet need in the art for reducing noise produced by aircraft around airports. Thus, there is an unmet need for reducing drag. Reducing drag over an aircraft wing can increase the climb gradient of the aircraft, and effectively reduce the noise generated by aircraft around airports. Improved climb gradient can also enable carrying greater payloads.

### SUMMARY OF THE INVENTION

Embodiments of the present invention provide an apparatus and a method for improving the climb gradient of an aircraft by reducing drag of an aircraft wing assembly. A chine or vortex control device is disposed on an outer surface of an engine nacelle. Reduction of drag over the wing and nacelle assembly improves the climb gradient of the aircraft, thereby allowing the aircraft to operate so as to reduce noise disturbances caused by the aircraft. Position and shape of the nacelle chine can be optimized to reduce drag for a variety of aircraft wing and nacelle assemblies. For example, the position and shape can be optimized for aircraft with and without leading edge high lift devices and other factors. In addition, while reducing drag, placement and shape of the chine can also be adjusted to reduce drag and increase the lift coefficient.

A method for improving the climb gradient of an aircraft in accordance with the invention is defined in claim 1.

An apparatus for improving the climb gradient of an aircraft in accordance with the invention is defined in claim 2.

Preferred embodiments of the apparatus of the invention form the subject matter of dependent claims 3 to 7.

The invention further provides a wing assembly comprising such an apparatus, as well as an aircraft comprising a wing assembly.

### BRIEF DESCRIPTION OF THE DRAWINGS

The preferred and alternative embodiments of the present invention are described in detail below with reference to the following drawings.
FIGURE 1A is a side elevational view of two aircraft with different climb gradients taking off from an airport;
FIGURE 1B is a prior art front view of a jet engine mounted to an aircraft wing;
FIGURE 2 is a perspective view from above the wing assembly of an engine nacelle equipped with a chine according to an embodiment of the present invention;
FIGURE 3 is a front view of an engine nacelle equipped with a chine according to an embodiment of the present invention;
FIGURE 4 is a graph showing drag coefficient plotted versus lift coefficient showing an effect of an embodiment of the present invention;
FIGURE 5 is a side elevational view of an aircraft equipped with an embodiment of the present invention; and
FIGURE 6 is a flowchart of a method using an embodiment of the present invention.

### DETAILED DESCRIPTION OF THE INVENTION

By way of overview, embodiments of the present invention provide an apparatus and a method for reducing drag of an aircraft wing assembly in operational angle of attack portions of flight where the aircraft wing assembly includes a wing and an engine nacelle mounted to the wing. Embodiments of the present invention include a nacelle chine mounted on an outboard side of the engine nacelle, and the nacelle chine is configured to reduce drag by redirecting at least a portion of fluid striking a forward end of the aircraft wing assembly such that a vortex is formed over the forward end of the aircraft wing assembly. Embodiments of the invention also include a mounting base configured to be secured to an outer surface of the engine nacelle at a mounting position along an outer surface of the engine nacelle. Embodiments of the invention also include a wing assembly incorporating the chine and an aircraft incorporating the chine.

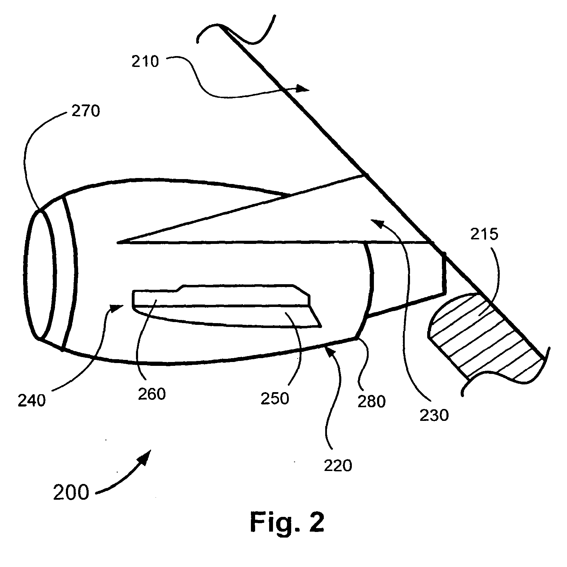

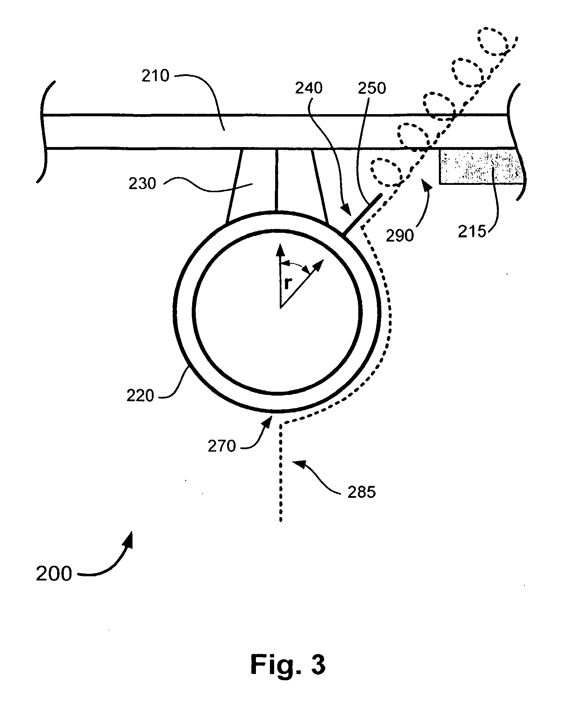

FIGURE 2 shows a perspective view of a wing assembly 200 using an embodiment of the present invention. The perspective view is taken from a perspective above the wing assembly on an outboard side of an aircraft. Like the prior art wing assembly 100 (FIGURE 1), the wing assembly 200 includes a wing 210, an engine nacelle 220, and an engine nacelle mount 230 securing the engine nacelle 220 to the wing 210. Also like the prior wing assembly 100 (FIGURE 1), the wing 200 is equipped with a leading edge high lift device 215, such as a flat panel Krueger flap, a variable camber Krueger flap, or a slat which is shown in a deployed position in FIGURE 2. The wing assembly 200 shown in FIGURE 2 also includes a vortex control device 240 according to an embodiment of the present invention. The vortex control device 240 includes a chine 250 extending outwardly from the engine nacelle 220, as will be further described in connection with FIGURE 3. The chine 250 extends from a mounting base 260 which secures the vortex control device 240 to the engine nacelle 220. The vortex control device 240 is mounted on an outboard side of the engine nacelle. As can be seen from FIGURE 2, the vortex control device 240 is deployed along a line roughly parallel to that of an axis of an engine (not shown) mounted in the engine nacelle 220. The vortex control device 240 also is positioned behind a leading edge 270 of the engine nacelle 220, but forward of a trailing edge of the engine nacelle 280. Those ordinarily skilled in the art of prior art vortex control devices deployed on engine nacelles directed to changing lift characteristics are familiar with positioning vortex control devices along axes of engines between the leading edge 270 and the trailing edge 280 of an engine nacelle 220. However, as will be further described and appreciated, prior art vortex control devices have been sized and positioned to adjust lift parameters, not to adjust drag and, therefore, noise characteristics.

FIGURE 3 shows a front view of the wing assembly 200 using an embodiment of the present invention. Again, the wing assembly 200 includes the wing 210, the engine nacelle 220, and the engine nacelle mount 230 securing the engine nacelle 220 to the wing 210. The wing 200 also is equipped with a leading edge high lift device 215, such as a flat panel Krueger flap, a variable camber Krueger flap, or a slat which is shown in a deployed position in FIGURE 3. The vortex control device 240 extends outwardly from the engine nacelle toward the outboard side as previously described. FIGURE 3 specifically shows the chine 250, with the mounting base (not shown) being mounted flush to the engine nacelle.

As shown in FIGURE 3, a fluid flow of air 285 strikes a leading edge 270 of the engine nacelle. However, unlike in the case of the prior art wing assembly 100 of FIGURE 1, the fluid flow 285 strikes the chine 250 instead of flowing around the nacelle 220 and becoming a turbulent flow 160 (FIGURE 1). The chine 250 creates an outboard vortex 290 that flows up toward the surface of the wing 210. The vortex 290 is a directed flow of fluid that advantageously results in less drag over the wing assembly 200. Because there is less drag, the climb gradient of an aircraft (not shown in FIGURE 3) equipped with the chine 250 has an increased climb gradient. As a result, the aircraft can climb more steeply and thus generate less of a perceived noise disturbance or climb at the same gradient with more payload upon takeoff as previously described.

As is highlighted in FIGURE 3, the vortex control device 240 is positioned radially at an angle r between zero degrees and ninety degrees as measured clockwise around an axis of an engine (not shown) mounted in the engine nacelle 220. The angle r preferably is optimized for the wing assembly 200 configuration. Similarly, a length and shape of the chine 250 also are optimized according to the configuration of the wing assembly 200. The wing configuration 200 manifests parameters including wing shape, size, and sweep angle, engine nacelle size and mounting features, presence or absence of a leading edge high lift device 215, such as flat panel Krueger flaps, variable camber Krueger flaps, or slats, extension of a leading edge high lift device across an entire surface of the wing or whether a gap is left over a nacelle, and other factors. Some or all of these factors can contribute to the aerodynamics of the wing assembly 200 and, therefore, may affect what is an optimal shape and/or placement of the chine on the engine nacelle 220.

An optimal shape and/or placement for the chine suitably is determined using mathematical modeling and/or wind-tunnel testing for the wing assembly with which the chine will be used. For one non-limiting example, using a 747-400 aircraft manufactured by The Boeing Company with flaps in a Flaps 10 detent takeoff configuration, an optimal size and shape for the chine is an ogive-shaped chine with a base chord of 57 inches and a maximum height of 13 inches. An optimal position for the chine is 50 inches, plus or minus 10 inches, from a leading edge of the nacelle, with a placement angle, angle r (FIGURE 3), of 70 degrees with no toe-in of the chine. A larger chine was shown to have increased drag reduction benefits, but increasing chine size can negatively affect other performance characteristics, as will be described below. If the wing or nacelle has a different shape than a 747-400, the wing has a different sweep angle than a 747-400, or other parameters are different, an optimal shape, size, and placement of the chine could vary significantly.

Because it is known in the art to use vortex control devices or chines to improve the maximum lift coefficient of wing assemblies, it should be appreciated that a focus of using a chine according to embodiments of the present invention principally is to reduce drag, not to improve lift. In a vortex control device to improve lift, most positive difference is yielded by a chine on an inboard side of the engine nacelle. However, placement of a chine on the inboard side of the engine results in increased drag over the wing assembly. By contrast, the drag reduction benefit is yielded by placing a chine on an outboard side of the engine, although chines on both sides can have positive lift improvement effects.

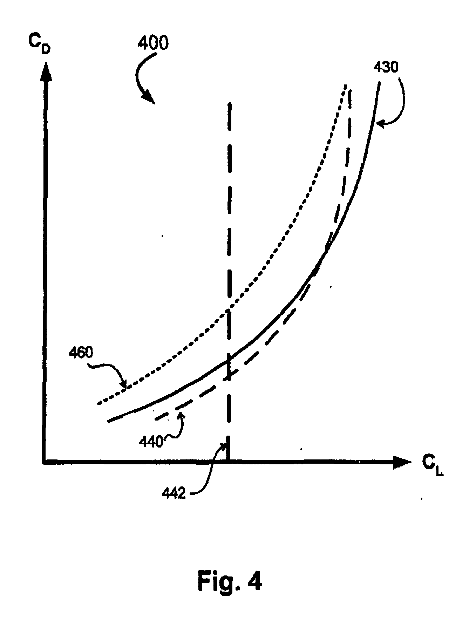

FIGURE 4 shows a graph 400 plotting drag coefficient C_{D} versus lift coefficient C_{L} for various configurations of a hypothetical wing assembly. High lift coefficients are desirable, while lower drag coefficients are preferred. A first, solid curve 430 represents a plot of drag coefficient C_{D} versus lift coefficient C_{L} for a wing assembly using no chines. The solid curve 430 serves as a basis for comparison with wing assemblies using other configurations. A second, dashed curve 440 represents a plot of drag coefficient C_{D} versus lift coefficient C_{L} for wing assembly using an outboard chine shaped and placed to reduce drag. As can be seen by comparing the first curve 430 and the second curve 440, as the lift coefficient C_{L} is decreased, the wing assembly using the outboard chine exhibits a reduced drag coefficient C_{D} as compared to the wing assembly using no chines. A dashed line 442 represents an operational lift coefficient C_{L} and, thus, what C_{D} and C_{L} both would be at an operational angle of attack for either type of wing assembly. Accordingly, the graph 400 shows that, at operational angles of attack 442, a wing assembly using an outboard chine has a reduced drag coefficient C_{D} as compared to a wing assembly using no chines.

For comparison, a third curve 460 shows the drag coefficient C_{D} and lift coefficient C_{L} plotted for a wing assembly using only an inboard chine. It will be appreciated that the third curve 460 shows that such a configuration exhibits a higher drag coefficient C_{D} at every lift coefficient C_{L} shown. Thus, use of an inboard chine has the effect of increasing drag, which is opposite of the effect advantageously afforded by embodiments of the present invention.

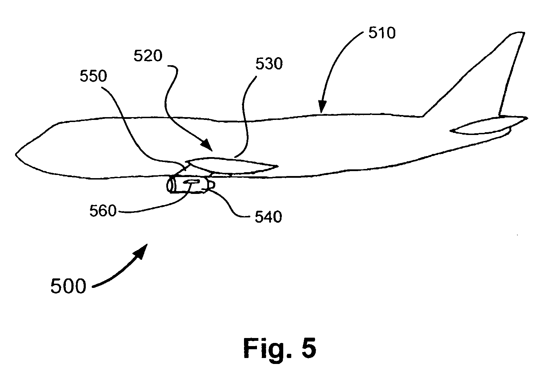

FIGURE 5 is a side elevational view of an aircraft 500 using an embodiment of the present invention. The aircraft 500 has a fuselage 510 which supports a wing assembly 520. The wing assembly 520 includes the wing 530 and a plurality of engine nacelles 540, one which one is shown in FIGURE 5. The engine nacelle 540 is mounted to the wing 530 by an engine nacelle mount 550. A chine 560 is mounted on an outboard side of the engine nacelle 540. The chine 560 is sized, shaped, and mounted as previously described in connection with FIGURES 2 and 3. As previously described, chines 560 suitably are mounted on a plurality of engine nacelles 540, on the outboard sides.

The aircraft 500 shown in FIGURE 5 is generally representative of a commercial passenger aircraft, including, for example, the 737, 747, 757, 767, and 777 models commercially-available from The Boeing Company. The apparatus and methods disclosed herein, however, may also be employed in any other types of aircraft including those described, for example, in The Illustrated Encyclopedia of Military Aircraft by Enzo Angelucci, published by Book Sales Publishers, September 2001.

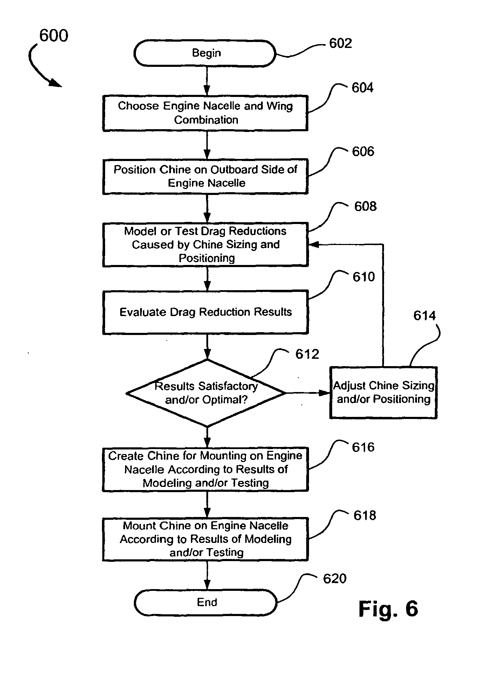

FIGURE 6 shows a routine 600 for determining a chine position and size to reduce drag and mounting the chine on an engine nacelle. The routine 600 begins at a block 602. Optimizing chine position and size to reduce drag is a function of the configuration of the wing assembly. Thus, at a block 604, the wing assembly configuration, including the nacelle and wing combination, are selected. Using empirical testing to determine desired positioning and shaping of the chine, at a block 606 the chine is positioned on an engine nacelle. At a block 608, a drag reduction caused by chine positioning and sizing is measured by modeling and/or testing. For example, wind tunnel testing suitably is used to measure effects on drag resulting from various chine sizes and placements. At a block 610, drag and noise reduction results are evaluated. At a decision block 612, it is determined if the results are satisfactory and/or optimal. As previously described, an objective is to decrease the drag coefficient C_{D} at an operational lift coefficient C_{L}. In keeping with the previous descriptions of airport noise concerns, minimizing the drag coefficient C_{D} at a takeoff lift coefficient C_{L} is satisfactory. If the results are not satisfactory or optimal, at a block 614 chine position or shape is adjusted and the routine 600 loops to the block 608 for further modeling or testing. On the other hand, if the results are determined at the block 612 to be satisfactory, at a block 616, a working chine for mounting on an engine nacelle is created. At a block 618, the chine created at the block 616 is mounted on an engine nacelle. The routine 600 ends at a block 620. It will be appreciated that, for multiple engine nacelle wing assemblies, the routine 600 can be repeated for as many engine nacelles are used.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. Method for improving the climb gradient of an aircraft, the method comprising:
- providing an aircraft wing assembly (200) including a wing (210) and an engine nacelle (220) mounted to the wing;
- mounting a nacelle chine (250) on an outboard side only of the engine nacelle (220), wherein the nacelle chine is arranged along a line substantially parallel with an axis of an engine mounted in the engine nacelle (220), extending from a first position behind an engine nacelle leading edge (270) to a second position forward of an engine nacelle trailing edge (280), the second position being closer to the trailing edge (280) than to the leading edge (270);
- wherein when the aircraft wing assembly is in an operational angle of attack situation in which the lift coefficient (C_{L}) is substantially lower than a maximum lift coefficient for the aircraft wing assembly, at least a portion of fluid striking a forward edge of the aircraft wing assembly (200) is redirected by the nacelle chine (250) such that a vortex is formed over the forward edge of the aircraft wing assembly, said vortex reducing drag over the wing assembly.

2. Apparatus for improving the climb gradient of aircraft by reducing drag over an aircraft wing assembly (200) in operational angle of attack situations in which the lift coefficient (C_{L}) is substantially lower than a maximum lift coefficient for the aircraft wing assembly, the aircraft wing assembly (200) including a wing (210) and an engine nacelle (220) mounted to the wing (210), the apparatus comprising:
- a nacelle chine (250) mounted on an outboard side only of the engine nacelle (220), the nacelle chine (250) being configured to reduce drag by redirecting at least a portion of fluid flow proximate a forward edge of the aircraft wing assembly (200) such that a vortex is formed over the forward edge of the aircraft wing assembly (200); and
- a mounting base (260) configured to be secured to an outer surface of the engine nacelle (220) at a mounting position along an outer surface of the engine nacelle (220) along a line substantially parallel with an axis of an engine mounted in the engine nacelle (220).

3. Apparatus according to claim 2, wherein:
- the mounting base (260) is mounted in a position according to a placement configuration specific to an engine and wing combination for reducing drag; and
- the chine (250) extending in a substantially perpendicular and planar direction from the mounting base (260) and shaped to create an outboard wake vortex in fluid striking a forward surface of the engine nacelle (220) and passing over an outboard surface of the engine nacelle (220) and the wing (210) to which the engine nacelle (220) is attached, the chine (250) having chine parameters including a length along the line substantially parallel with the axis of the engine mounted in the engine nacelle (220), an outer edge shape at a distal edge away from the mounting base (260), and a radial length measured from the mounting base (260) to the outer edge according to the placement configuration specific to the engine and wing combination for reducing drag.

4. Apparatus according to claim 3, wherein the apparatus employs a placement configuration specific to the engine and wing combination including an outboard placement on the outboard surface of the engine at a location including a radial position between zero degrees and ninety degrees clockwise from a top of the engine measured around the axis of the engine viewing the engine from a front side.

5. Apparatus according to claim 2, 3 or 4, wherein the chine parameters and the placement configuration are optimized according to the engine and wing combination for reducing drag according to one of modeling and testing.

6. Apparatus according to any of claims 2-5, wherein the chine parameters and the placement configuration are determined to reduce drag for a wing (210) equipped with a leading edge high lift device (215) including one of a flat panel Krueger flap, a variable camber Krueger flap, or a slat.

7. Apparatus according to claim 6, wherein the leading edge high lift device (215) does not extend along a forward edge of the wing (210) in a position over a location where the engine nacelle (220) is mounted on the wing (210).

8. Wing assembly for reducing drag in operational angle of attack situations in which the lift coefficient (C_{L}) is substantially lower than a maximum lift coefficient for the aircraft wing assembly, the wing assembly comprising:
- a wing (210);
- an engine nacelle (220) mounted to the wing; and
- an apparatus according to any of claims 2-7.

9. Wing assembly according to claim 8, wherein the apparatus employs a placement configuration specific to the engine and wing combination including an outboard placement on the outboard surface of the engine at a location including a radial position between zero degrees and ninety degrees clockwise from a top of the engine measured around the axis of the engine viewing the engine from a front side.

10. Wing assembly according to any of claims 8 or 9, wherein the wing assembly includes a plurality of engine nacelles (220), each of the engine nacelles being equipped with the nacelle chine (250) and the mounting base (260).

11. Aircraft for reducing drag in operational angle of attack situations in which the lift coefficient (C_{L}) is substantially lower than a maximum lift coefficient for a wing assembly of the aircraft, the aircraft comprising:
- a fuselage; and
- a wing assembly according to claim 8, 9 or 10 and mounted to the fuselage.

12. Aircraft according to claim 11, wherein the apparatus employs a placement configuration specific to the engine and wing combination including an outboard placement on the outboard surface of the engine at a location including a radial position between zero degrees and ninety degrees clockwise from a top of the engine measured around the axis of the engine viewing the engine from a front side.

## Patentansprüche

1. Verfahren zur Verbesserung des Steiggradienten eines Luftfahrzeugs, das Verfahren umfassend:
- Bereitstellen einer Luftfahrzeugflügelanordnung (200), einschließlich eines Flügels (210) und einer am Flügel angebrachten Triebwerksgondel (220);
- Anbringen einer Gondel-Wirbelsteuervorrichtung (-Chine)(250) lediglich auf einer Außenbordseite der Triebwerksgondel (220), wobei die Gondelwirbelsteuervorrichtung entlang einer Linie, die im Wesentlichen parallel zu einer Achse eines in der Triebwerksgondel (220) angebrachten Triebwerks ist, angeordnet ist, sich erstreckend von einer ersten Position hinter einer Triebwerksgondel-Vorderkante (270) zu einer zweiten Position vor einer Triebwerksgondel-Hinterkante (280), wobei die zweite Position näher an der Hinterkante (280) ist als an der Vorderkante (270);
- wobei, wenn die Luftfahrzeugflügelanordnung in einer Betriebssituation mit Anstellwinkel ist, in der der Auftriebskoeffizient (C_{L}) im Wesentlichen niedriger ist als ein maximaler Auftriebskoeffizient für die Luftfahrzeugflügelanordnung, zumindest ein Teil von Fluid, das auf eine vordere Kante der Luftfahrzeugflügelanordnung (200) trifft, durch die Gondelwirbelsteuervorrichtung (250) so umgeleitet wird, dass sich ein Wirbel über der vorderen Kante der Luftfahrzeugflügelanordnung bildet, wobei der Wirbel Widerstand über der Flügelanordnung verringert.

2. Vorrichtung zur Verbesserung des Steiggradienten eines Luftfahrzeugs durch Verringern von Widerstand über einer Luftfahrzeugflügelanordnung (200) in Betriebssituationen mit Anstellwinkel, in denen der Auftriebskoeffizient (C_{L}) im Wesentlichen niedriger ist als ein maximaler Auftriebskoeffizient für die Luftfahrzeugflügelanordnung, wobei die Luftfahrzeugflügelanordnung (200) einen Flügel (210) und eine am Flügel (210) angebrachte Triebwerksgondel (220) einschließt, die Vorrichtung umfassend:
- eine Gondel-Wirbelsteuereinrichtung (-Chine) (250), die lediglich auf einer Außenbordseite der Triebwerksgondel (220) angebracht ist, wobei die Gondelwirbelsteuereinrichtung (250) ausgebildet ist, um Widerstand zu verringern, indem zumindest ein Teil des Fluidstroms nächst einer vorderen Kante der Luftfahrzeugflügelanordnung (200) so umgeleitet wird, dass sich ein Wirbel über der vorderen Kante der Luftfahrzeugflügelanordnung (200) bildet; und
- eine Montagebasis (260), die ausgebildet ist, um an einer Außenfläche der Triebwerksgondel (220) an einer Anbringungsposition entlang einer Außenfläche der Triebwerksgondel (220) entlang einer Linie gesichert zu werden, die im Wesentlichen parallel zu einer Achse eines in der Triebwerksgondel (220) angebrachten Triebwerks ist.

3. Vorrichtung nach Anspruch 2, wobei:
- die Montagebasis (260) in einer Position entsprechend einer Platzierungskonfiguration angebracht ist, die für eine Triebwerks- und Flügelkombination zur Verringerung von Widerstand spezifisch ist; und
- die Wirbelsteuereinrichtung (250) sich in einer im Wesentlichen perpendikularen und planen Richtung von der Montagebasis (260) aus erstreckt und geformt ist, um eine Außenbordwirbelschleppe in Fluid zu erzeugen, das auf eine Vorderfläche der Triebwerksgondel (220) trifft und über eine Außenbordfläche der Triebwerksgondel (220) und den Flügel (210) strömt, an dem die Triebwerksgondel (220) befestigt ist, wobei die Wirbelsteuereinrichtung (250) Wirbelsteuereinrichtungsparameter aufweist, einschließlich einer Länge entlang der Linie, die im Wesentlichen parallel zur Achse des in der Triebwerksgondel (220) angebrachten Triebwerks ist, einer Außenkantenform an einer distalen Kante entfernt von der Montagebasis (260), und einer radialen Länge, gemessen von der Montagebasis (260) zur Außenkante entsprechend der Platzierungskonfiguration, die für die Triebwerks- und Flügelkombination zur Verringerung von Widerstand spezifisch ist.

4. Vorrichtung nach Anspruch 3, wobei die Vorrichtung eine für die Triebwerks- und Flügelkombination spezifische Platzierungskonfiguration nutzt, einschließlich einer Außenbordplatzierung auf der Außenbordfläche des Triebwerks an einer Stelle, die eine radiale Position einschließt zwischen null Grad und neunzig Grad im Uhrzeigersinn von einer Oberseite des Triebwerks aus, gemessen um die Achse des Triebwerks bei Betrachtung des Triebwerks von einer Vorderseite.

5. Vorrichtung nach Anspruch 2, 3 oder 4, wobei die Wirbelsteuereinrichtungsparameter und die Platzierungskonfiguration optimiert sind entsprechend der Triebwerks- und Flügelkombination zur Verringerung von Widerstand in Übereinstimmung mit einem von Modellieren und Testen.

6. Vorrichtung nach einem der Ansprüche 2 - 5, wobei die Wirbelsteuereinrichtungsparameter und die Platzierungskonfiguration festgelegt sind, um Widerstand für einen Flügel (210) zu verringern, der mit einer Vorderkanten-Hochauftriebseinrichtung (215) ausgestattet ist, einschließlich einer von einer Flach-Platten-Krüger-Klappe, einer wölbungsvariablen Krüger-Klappe oder einem Vorflügel.

7. Vorrichtung nach Anspruch 6, wobei sich die Vorderkanten-Hochauftriebseinrichtung (215) nicht entlang einer vorderen Kante des Flügels (210) in einer Position über einer Stelle erstreckt, wo die Triebwerksgondel (220) auf dem Flügel (210) angebracht ist.

8. Flügelanordnung zur Verringerung von Widerstand in Betriebssituationen mit Anstellwinkel, in denen der Auftriebskoeffizient (C_{L}) im Wesentlichen niedriger ist als ein maximaler Auftriebskoeffizient für die Luftfahrzeugflügelanordnung, wobei die Flügelanordnung umfasst:
- einen Flügel (210);
- eine am Flügel angebrachte Triebwerksgondel (220); und
- eine Vorrichtung nach einem der Ansprüche 2 - 7.

9. Flügelanordnung nach Anspruch 8, wobei die Vorrichtung eine für die Triebwerks- und Flügelkombination spezifische Platzierungskonfiguration nutzt, einschließlich einer Außenbordplatzierung auf der Außenbordfläche des Triebwerks an einer Stelle, die eine radiale Position einschließt zwischen null Grad und neunzig Grad im Uhrzeigersinn von einer Oberseite des Triebwerks aus, gemessen um die Achse des Triebwerks bei Betrachtung des Triebwerks von einer Vorderseite.

10. Flügelanordnung nach Anspruch 8 oder 9, wobei die Flügelanordnung eine Mehrzahl von Triebwerksgondeln (220) einschließt, wobei jede der Triebwerksgondeln mit der Gondelwirbelsteuereinrichtung (250) und der Montagebasis (260) ausgestattet ist.

11. Luftfahrzeug zur Verringerung von Widerstand in Betriebssituationen mit Anstellwinkel, in denen der Auftriebskoeffizient (C_{L}) im Wesentlichen niedriger ist als ein maximaler Auftriebskoeffizient für eine Flügelanordnung des Luftfahrzeugs, wobei das Luftfahrzeug umfasst:
- einen Rumpf; und
- eine Flügelanordnung nach Anspruch 8, 9 oder 10 und am Rumpf angebracht.

12. Luftfahrzeug nach Anspruch 11, wobei die Vorrichtung eine für die Triebwerks- und Flügelkombination spezifische Platzierungskonfiguration nutzt, einschließlich einer Außenbordplatzierung auf der Außenbordfläche des Triebwerks an einer Stelle, die eine radiale Position einschließt zwischen null Grad und neunzig Grad im Uhrzeigersinn von einer Oberseite des Triebwerks aus, gemessen um die Achse des Triebwerks bei Betrachtung des Triebwerks von einer Vorderseite.

## Revendications

1. Procédé d'amélioration de la pente aérodynamique d'un avion, le procédé comprenant :
- la fourniture d'un assemblage d'aile d'avion (200) comportant une aile (210) et une nacelle-moteur (220) montée sur l'aile ;
- le montage d'un déflecteur de nacelle (250) sur un côté extérieur seulement de la nacelle-moteur (220), le déflecteur de nacelle étant agencé le long d'une ligne sensiblement parallèle à un axe d'un moteur monté dans la nacelle-moteur (220), s'étendant d'une première position située derrière un bord d'attaque (270) de la nacelle-moteur jusqu'à une seconde position située devant un bord de fuite (280) de la nacelle-moteur, la seconde position étant plus proche du bord de fuite (280) que du bord d'attaque (270) ;
- dans lequel, lorsque l'assemblage d'aile d'avion se trouve dans une situation d'angle d'attaque opérationnel dans laquelle le coefficient de portance (C_{L}) est sensiblement inférieur à un coefficient de portance maximum pour l'assemblage d'aile d'avion, au moins une partie des fluides frappant un bord avant de l'assemblage d'aile d'avion (200) est redirigée par le déflecteur de nacelle (250) de sorte qu'il se forme un tourbillon au-dessus du bord avant de l'assemblage d'aile d'avion, ledit tourbillon produisant une traînée sur l'assemblage d'aile.

2. Appareil d'amélioration de la pente aérodynamique d'un avion en réduisant la traînée sur un assemblage d'aile d'avion (200) dans des situations d'angle d'attaque opérationnel dans lesquelles le coefficient de portance (C_{L}) est sensiblement inférieur à un coefficient de portance maximum pour l'assemblage d'aile d'avion, l'assemblage d'aile d'avion (200) comportant une aile (210) et une nacelle-moteur (220) montée sur l'aile (210), l'appareil comprenant :
- un déflecteur de nacelle (250) monté sur un côté extérieur seulement de la nacelle-moteur (220), le déflecteur de nacelle (250) étant configuré pour réduire la traînée en redirigeant au moins une partie du flux de fluides proche d'un bord avant de l'assemblage d'aile d'avion (200) de sorte qu'il se forme un tourbillon au-dessus du bord avant de l'assemblage d'aile d'avion (200) ; et
- une base de montage (260) configurée pour être fixée sur une surface extérieure de la nacelle-moteur (220) en un emplacement de montage le long d'une surface extérieure de la nacelle-moteur (220) en suivant une ligne sensiblement parallèle à un axe d'un moteur monté dans la nacelle-moteur (220).

3. Appareil selon la revendication 2, dans lequel :
- la base de montage (260) est montée en un emplacement qui est fonction d'une configuration de mise en place spécifique à une association moteur/aile visant à réduire la traînée ; et
- le déflecteur (250) se prolongeant dans un sens essentiellement perpendiculaire et planaire à partir de la base de montage (260) et étant façonné de manière à créer un tourbillon de sillage extérieur dans les fluides frappant une surface avant de la nacelle-moteur (220) et passant sur une surface extérieure de la nacelle-moteur (220) et de l'aile (210) à laquelle la nacelle-moteur (220) est rattachée, le déflecteur (250) ayant des paramètres de déflecteur comprenant une longueur le long de la ligne sensiblement parallèle à l'axe du moteur monté dans la nacelle-moteur (220), une forme de bord extérieur au niveau d'un bord distal éloigné de la base de montage (260), et une longueur radiale mesurée depuis la base de montage (260) jusqu'au bord extérieur en fonction de la configuration de mise en place spécifique à l'association moteur/aile en vue de réduire la traînée.

4. Appareil selon la revendication 3, dans lequel l'appareil met en oeuvre une configuration de mise en place spécifique à l'association moteur/aile comportant une mise en place extérieure sur la surface extérieure du moteur en un emplacement comportant une position radiale entre zéro degrés et quatre-vingt-dix degrés dans le sens horaire depuis une partie supérieure du moteur mesurés autour de l'axe du moteur, en considérant le moteur depuis sa face avant.

5. Appareil selon la revendication2, 3 ou 4, dans lequel les paramètres du déflecteur et la configuration de mise en place sont optimisés compte tenu de l'association moteur/aile en vue de réduire la traînée conformément à une modélisation ou à des essais.

6. Appareil selon l'une quelconque des revendications 2 à 5, dans lequel les paramètres du déflecteur et la configuration de mise en place sont déterminés de manière à réduire la traînée pour une aile (210) pourvue d'un dispositif de sustentation de bord d'attaque (215) comportant un volet Krüger à pan plat, un volet Krüger à cambrure variable ou un bec de bord d'attaque.

7. Appareil selon la revendication 6, dans lequel le dispositif de sustentation de bord d'attaque (215) ne s'étend pas le long d'un bord avant de l'aile (210) plus loin qu'un emplacement où la nacelle-moteur (220) est montée sur l'aile (210).

8. Assemblage d'aile visant à réduire la traînée dans des situations d'angle d'attaque opérationnel dans lesquelles le coefficient de portance (C_{L}) est sensiblement inférieur à un coefficient de portance maximum pour l'assemblage d'aile d'avion, l'assemblage d'aile comprenant :
- une aile (210) ;
- une nacelle-moteur (220) montée sur l'aile ; et
- un appareil selon l'une quelconque des revendications 2 à 7.

9. Assemblage d'aile selon la revendication 8, dans lequel l'appareil met en oeuvre une configuration de mise en place spécifique à l'association moteur/aile comportant une mise en place extérieure sur la surface extérieure du moteur en un emplacement comportant une position radiale entre zéro degrés et quatre-vingt-dix degrés dans le sens horaire depuis une partie supérieure du moteur mesurés autour de l'axe du moteur, en considérant le moteur depuis sa face avant.

10. Assemblage d'aile selon l'une quelconque des revendications 8 ou 9, dans lequel l'assemblage d'aile comporte une pluralité de nacelle-moteurs (220), chacune des nacelle-moteurs étant pourvue du déflecteur de nacelle (250) et de la base de montage (260).

11. Avion visant à une réduction de la traînée dans des situations d'angle d'attaque opérationnel dans lesquelles le coefficient de portance (C_{L}) est sensiblement inférieur à un coefficient de portance maximum pour l'assemblage d'aile de l'avion, l'avion comprenant :
- un fuselage ; et
- un assemblage d'aile selon la revendication 8, 9 ou 10, monté sur le fuselage.

12. Avion selon la revendication 11, dans lequel l'appareil met en oeuvre une configuration de mise en place spécifique à l'association moteur/aile comportant une mise en place extérieure sur la surface extérieure du moteur en un emplacement comportant une position radiale entre zéro degrés et quatre-vingt-dix degrés dans le sens horaire depuis une partie supérieure du moteur mesurés autour de l'axe du moteur, en considérant le moteur depuis sa face avant.
